# EUROPEAN PATENT APPLICATION

(11) **EP 3 276 801 A1**
(43) Date of publication of application: **31.01.2018**
(21) Application number: 17182913.8
(22) Date of filing: 25.07.2017
(51) Int. Cl.: H02K 15/03, H02K 1/24, H02K 1/27, H02K 7/04

(54) **METHOD OF MANUFACTURING A ROTOR ASSEMBLY, IN PARTICULAR FOR AN ELECTRIC MOTOR OF THE IPM-PMASR TYPE**

(30) Priority: 25.07.2016 CN 201610594614
(71) Applicant: Askoll Holding S.r.l., 36031 Povolaro di Dueville (Vicenza) (IT)
(72) Inventor: MARIONI, Elio, 36031 Dueville (Vicenza) (IT)
(74) Representative: Antonucci, Emanuele

(57) **Abstract**

Method of manufacturing a rotor assembly for a permanent-magnet-assisted synchronous motor, comprising the following steps:
- cutting a plurality of laminations (2) of equal shape, each lamination being substantially circular and having a plurality of inner slots (3);
- stacking said laminations (2) together so as to form a lamination stack (20), each lamination (2) being rotated of a predetermined angle with respect to the underlying one so that the slots (3) define continuous, axially skewed cavities (30) within the lamination stack (20);
- injecting, through injection-molding, a polymer-bonded magnetic compound within said cavities (30) in order to define inner permanent magnets (4) of the rotor assembly (1) filling said cavities (30).

## Description

### Field of Application

The present invention, in its most general aspect, refers to a method for manufacturing a rotor assembly and a respective electric motor.

In particular, the electric motor is of the IPM-PMASR type (Interior Permanent Magnet - Permanent Magnet Assisted Synchronous Reluctance motor).

In a preferred example, the rotor assembly and the motor manufactured according to the present invention are employed in the electric drive of the main drum of a washing machine.

However, said rotor assembly and motor can be employed in a wide range of industrial applications, and are particularly suited for controlled drives with a high power density, for instance electric vehicles' drives.

### Prior Art

Permanent-magnet assisted synchronous reluctance motor have been developed in the last decades and they represent a viable alternative to induction or permanent magnet synchronous motors for controlled drive applications.

A typical motor layout, disclosed in US Patent N. 5,818,140, has the rotor assembled out of axially stacked laminations. The rotor is subdivided in an even number of angular sectors, each sector having a same layout of cavities. The cavities are roughly arc-shaped, with their convex side pointing toward the centre of the rotor. Permanent-magnets are inserted in at least some of said cavities, so that adjacent sectors have magnets with opposite polarities.

A rotor having the above-mentioned layout can be reliably manufactured in a cost-effective way. The single laminations are punched in order to open slots and then stacked on a press, so that the superposed slots define the axial cavities. The permanent magnets are eventually inserted into the cavities.

Nonetheless, the above-mentioned process and the resulting products still present some drawbacks.

A first drawback derives from the comparatively high cogging torque of the resulting electric motor, which causes unwanted noise and vibration particularly at slower rotational speeds.

Other drawbacks derive from the housing of permanent magnets within the cavities. In first instance, the introduction of the permanent magnets results in a time-consuming operation impacting on the manufacturing costs of the electric motor. In second instance, the insertion of the magnet is a strong design constraint and usually involves a sub-optimal layout for the magnetic circuit of the rotor.

Another drawback relates to the balancing of the rotor assembly. In asynchronous as well as universal motors, a balancing step is typically carried out by removing material from the laminations at both ends of the rotor stack. However, with the previously-described rotor layout, such an operation would result in an unacceptable structural weakening of the whole rotor, and therefore has to be avoided.

The technical problem at the basis of the present invention is therefore that of overcoming the above-mentioned drawbacks of the method of manufacturing a permanent-magnet assisted synchronous reluctance motor according to the prior art.

### Summary of the Invention

The above-mentioned technical problem is solved by a method of manufacturing a rotor assembly for a permanent-magnet assisted synchronous motor, comprising the following steps:
- cutting a plurality of laminations of equal shape, each lamination being substantially circular and having a plurality of inner slots;
- stacking said laminations together so as to form a lamination stack, each lamination being rotated of a predetermined angle with respect to the underlying one so that the slots define continuous, axially skewed cavities within the lamination stack;
- injecting, through injection-molding, a polymer-bonded magnetic compound within said cavities in order to define inner permanent magnets of the rotor assembly filling said cavities.

In a preferred way, and according to a typical configuration of the permanent-magnet assisted synchronous motor, the inner slots are substantially arc-shaped, their convex side pointing toward the center of their lamination, said inner slots being configured in an even number of groups, each group being confined in a different circular sector of the lamination.

The permanent magnets defined in the cavities made up by the inner slots of adjacent groups are preferably magnetized with opposite polarities.

The skewed design of the rotor assembly obtained by subsequent rotations of the single laminations is meant to reduce the cogging torque and the related drawbacks, such as excessive noise and vibrations.

The use of a polymer-bonded magnetic compound filling the skewed cavities makes it easy to manufacture the rotor assembly where the non-straight shape of the cavities would have rendered difficult, if not impossible, the positioning of traditional permanent magnets.

The relative angle of rotation between two subsequent laminations in the stack is accurately chosen in order to ensure smooth operation of the resulting electric motor and to minimize the cogging torque. By way of example, being N the number of laminations in the stack, the relative angle can be comprised between 10°/N and 20°/N, being preferably equal to 15°/N.

The manufacturing method may further comprise a step of applying at least a balancing plate over one or both ends of the lamination stack.

By adding a balancing plate to the lamination stack, the balancing can be advantageously performed without removing material from the lamination, and thus without unduly weakening the rotor structure.

The balancing plate can be advantageously made in aluminum or aluminum alloy.

During the injection step, the polymer-bonded magnetic compound may further define at least one anchoring feature protruding in the axial direction with respect to the lamination stack, said balancing plate being attached to said anchoring feature.

Preferably, two anchoring features are provided, at both ends of the lamination stack.

Preferably, said anchoring feature is in the form of an anchoring rim, which is housed in a corresponding groove of the balancing plate.

Preferably, said balancing plate is attached to said anchoring feature by means of a glue, for instance an epoxy resin heat resistant at a temperature of at least 130°C.

The method of manufacturing may then comprise a step of balancing the rotor assembly by removing material from the balancing plate, preferably by blind drilling of the plate surface.

The method of manufacturing may further comprise a step of magnetizing the polymer-bonded magnetic compound, so that the inner permanent magnets are magnetized with different polarities.

In particular, said step of magnetizing the polymer-bonded magnetic compound is preferably performed during injection molding, by suitably applying magnetic fields within a mold housing the lamination stack.

The method may advantageously comprise a step of press fitting an axle in a central hole of the lamination stack, preferably performed before the step of injection molding.

The injection-molding step may be performed by inserting the lamination stack in a housing within a mold, the polymer-bonded magnetic compound being injected laterally into a feeder of the mold placed over the housing.

The above-mentioned technical problem is equally solved by a method of manufacturing a permanent-magnet assisted synchronous motor, comprising the one or more of the above-mentioned steps of manufacturing a rotor assembly.

Further characteristics and advantages of the invention will become clear from the following description of a specific embodiment given by way of non-limiting example, with reference to the enclosed drawings.

### Brief Description of the Drawings

Figure 1 shows a top view of a lamination stack obtained by the manufacturing method according to the invention;

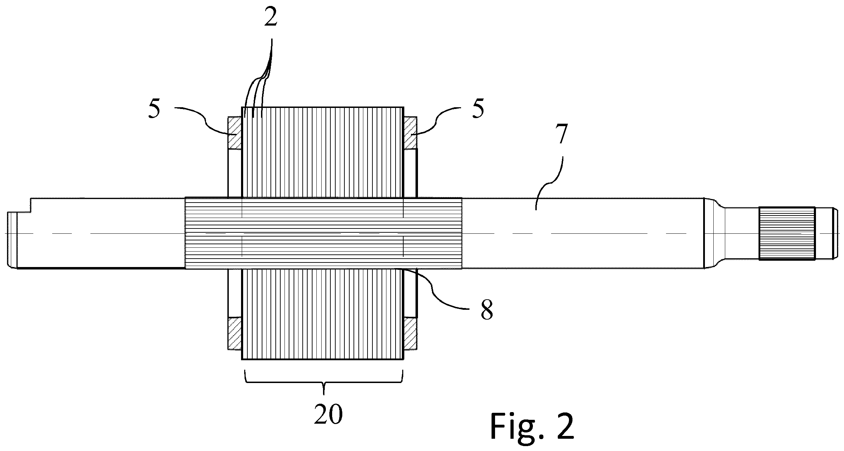

Figure 2 shows a cross-sectional side view of the lamination stack of Figure 1;

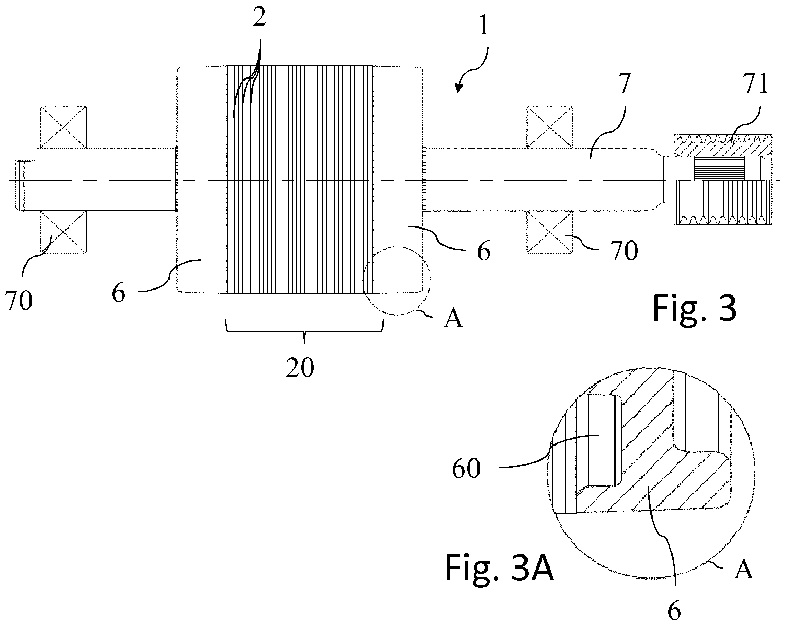

Figure 3 shows a side view of a rotor assembly obtained by the manufacturing method according to the invention;
Figure 3A shows an enlarged detail A of the rotor assembly in Figure 3;

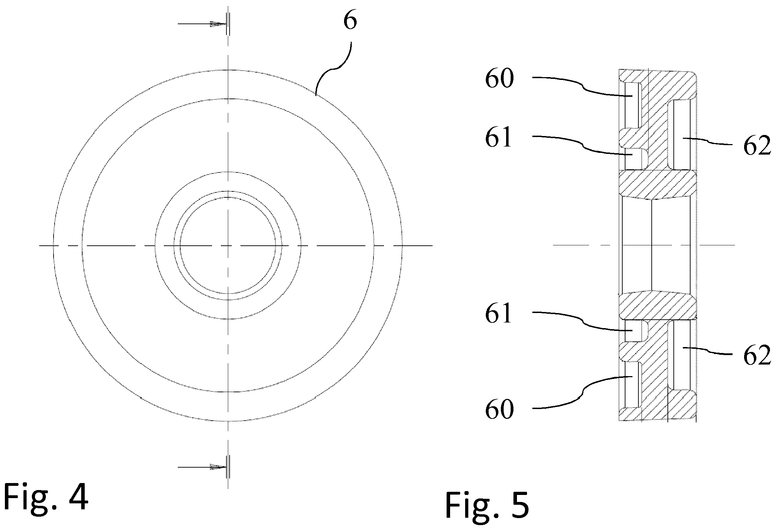

Figure 4 shows a top view of a balancing plate assembled in the manufacturing method according to the invention;
Figure 5 shows a cross-sectional side view of the balancing plate of Figure 4;

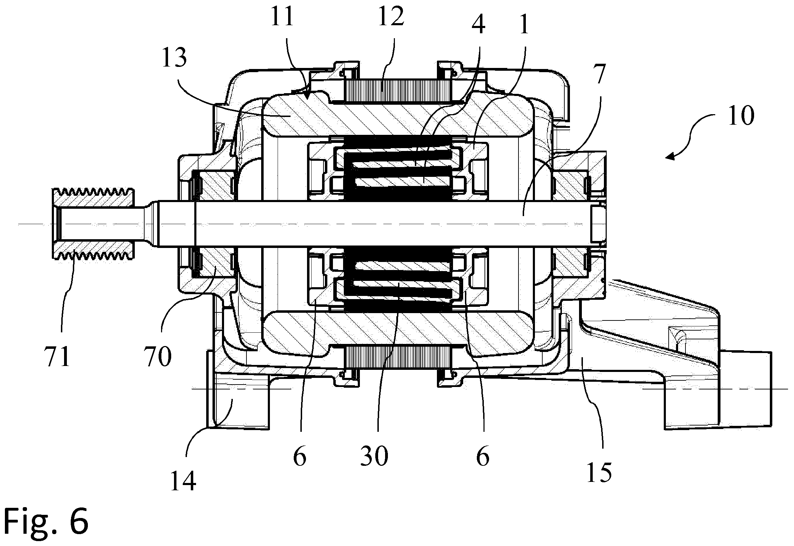

Figure 6 shows a cross-sectional side view of a permanent-magnet-assisted synchronous motor obtained by the manufacturing method according to the invention;

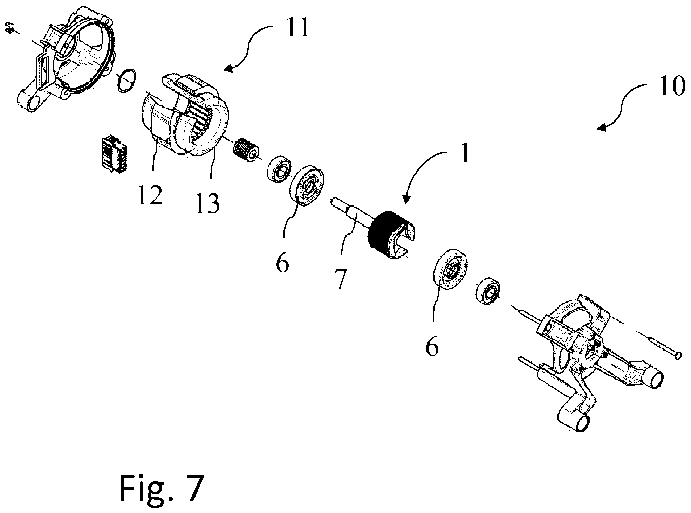

Figure 7 shows a perspective exploded view of the permanent-magnet-assisted synchronous motor of Figure 6;

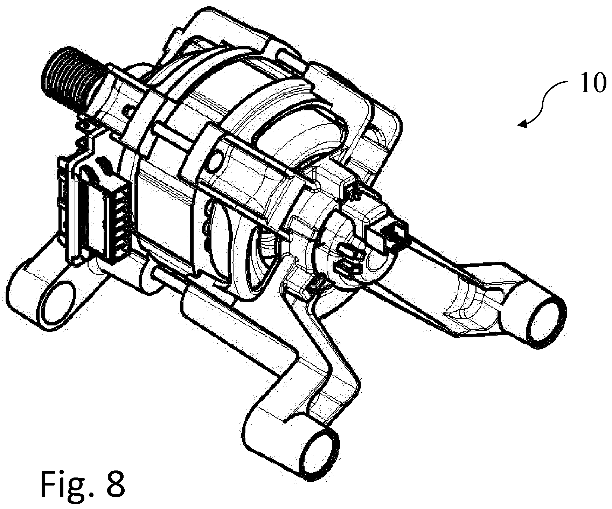

Figure 8 shows a perspective view of the permanent-magnet-assisted synchronous motor of Figure 6;
Figure 9 shows a cross-sectional side view of a mold employed in the manufacturing method according to the invention.

### Detailed Description

With reference to the above-described figures, the rotor assembly manufactured according to the present invention is generally designated with reference number 1, while the whole permanent-magnet-assisted synchronous motor comprising said rotor assembly is referenced with 10.

In the preferred embodiment described herein, the motor is meant to drive the drum of a washing machine.

The rotor assembly 1 is made up of a lamination stack 20, composed of a plurality of laminations 2 made of electrical steel. According to a known layout, each lamination 2 has a circular shape, and is divided in an even number of circular sectors, four in the preferred embodiment depicted herewith. Each circular sector features a plurality of roughly arc-shaped slots 3, the convex side of which points toward the centre of the lamination. In the preferred embodiment depicted herewith, each circular sector has three slots 3.

For further indication on the shape and function of the slots 3, reference is made to the prior art document US 5,818,140.

Note that, in the present embodiment, the slots 3 are divided by a radial reinforcing bridge 31, which cuts the circular sector and the slots 3 in two symmetrical halves.

The stacked laminations 2 are slightly rotated, by a predefined angle α/N (N being the total number of the laminations 2), one with respect to the following, so that the slots 3 define axially skewed cavities 30 of the lamination stack 20.

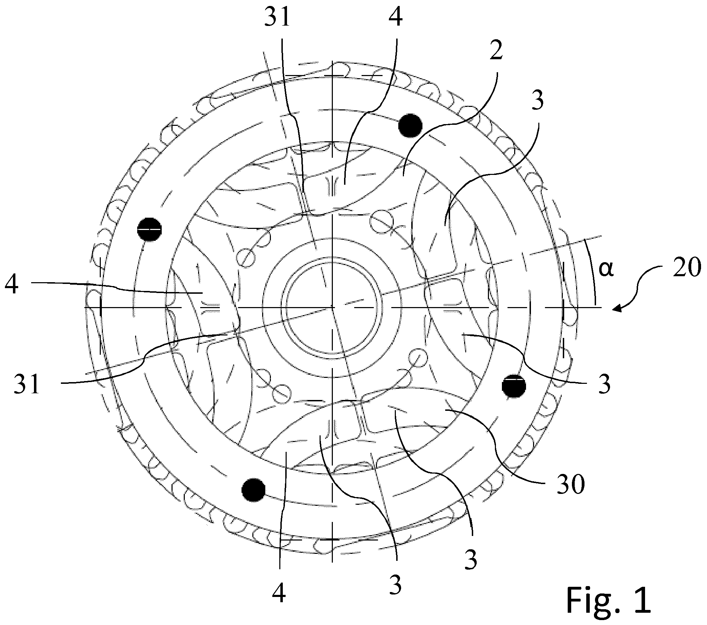

In Figure 1, the top and bottom laminations 2 of the lamination stack are depicted, respectively in solid and dashed line. The total angle α between the top and bottom laminations 2 is preferably equal to 15°.

The cavities 30 are filled by a polymer bonded magnetic compound which is magnetized in order to define permanent magnets 4. According to a known layout, the permanent magnets 4 pertaining to a single circular sector have the same polarity. Adjacent sectors feature permanent magnets 4 with opposite polarity.

The lamination stack 20 is further equipped with a pair of anchoring rims 5, respectively projecting from the first and last lamination 2 of the lamination pack 20. The anchoring rims 5 are made of the same polymer bonded material that fills the cavities 30, and covers an annular region close to the periphery of the lamination stack 20.

Over each anchoring rim 5 a respective balancing plate 6 is attached. The balancing plates 6 are mirror-shaped, thin cylindrical disks made of aluminum, topping the lamination stack 20 at both ends, providing excess material that can be removed for balancing purpose.

Each balancing plate 6 has a main circumferential groove 60 on the lamination side, which mates and houses the respective anchoring rim 5 on the lamination stack. A thinner secondary groove 61 is also provided on the same plate side, on an inner position with respect to the main groove 60. On the opposite side, a wider circumferential groove 62 is obtained.

The lamination stack 20 as well as the balancing plates 6 are traversed by a shaft 7, supported by bearings 70, and which is equipped at one of its ends with a pulley 71 meant to drive a washing machine drum through a belt (not shown).

The above-described stator assembly 1 is part of permanent-magnet-assisted synchronous motor 10 further comprising a stator assembly 11, made of a stator lamination stack 12 with open slots traversed by windings 13, preferably aluminum windings.

The stator assembly 11 is shaped according to the relevant art of permanent-magnet-assisted synchronous motors, see for instance US 5,818,140.

The stator assembly 11 is held between a front support 14 and a back support 15, both made of plastic material. Each support 14, 15 has four brackets departing from a common hub and defining a cup-shaped cage; the outer end of the brackets being connected by an outer rim. The cup-shaped brackets-and-rim structures are respectively fitted at the front and back ends of the stator assembly 11. The brackets of the front and back supports 14, 15 are connected together by means of threaded connectors. The hubs of the front and back supports 14, 15 house the bearings 70 supporting the rotor assembly 1, which is then held in position surrounded by the stator assembly 11.

A method of manufacturing the previously described rotor assembly 1 comprises the following steps.

In a first step, the laminations 2 are punched out of a sheet of electrical steel. The same punch and die, defining the lamination slots 3, can be employed for all laminations 2.

The laminations 2 are then pressed and stacked together in order to define the lamination stack 20. As previously mentioned, each lamination 2 is slightly rotated with respect to the previous one, so that the resulting lamination stack 20 has skewed cavities 30 defined by the successive slots 3.

The shaft 7 is press fitted in a central cylindrical hole of the lamination stack 20, possibly right after the step of stacking the laminations 2. The insertion of the shaft 7 solidly binds the laminations 2 together.

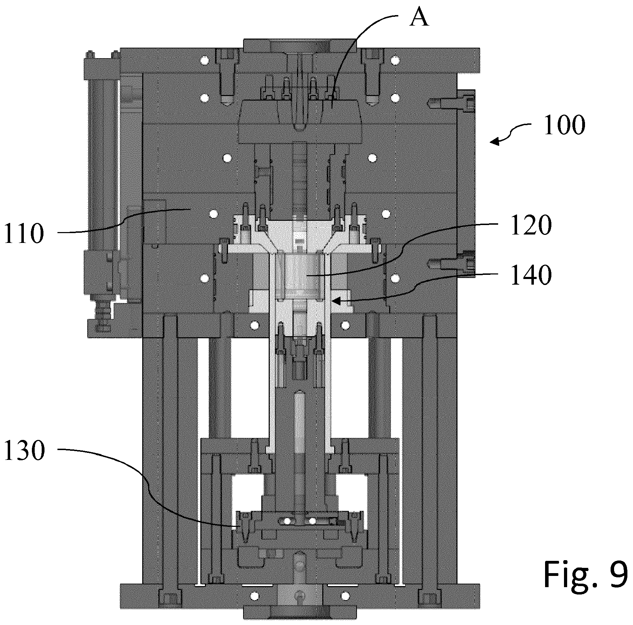

In a subsequent step, the lamination stack 20 together with the shaft 7 is inserted within a mold 100, shown in Figure 9.

The mold 100 comprises a housing or seat 120 for the stack-and-shaft assembly, which is placed with the shaft 7 in a vertical position.

The mold 100 comprises an upper fixed portion 110 and a lower movable portion 130. The fixed portion 110 is made of a plurality of stacked metal plates; between the top and the second from the top plates, in the area of A, a feeder (not shown) is provided that is connected with sprues to the housing 120.

Around the housing 120, magnetizing means 140 are provided for defining a strong magnetic field in order to permanently magnetize the polymer bonded magnetic compound within the cavities 30.

After inserting the lamination stack 20 and shaft 7 within the mold 100, an injection molding step is performed. In said step, the polymer bonded magnetic compound is injected and overmolded on the lamination stack 20.

Preferably, the molding compound completely or partially fills the cavities 30, and overflows above and below the lamination stack 20 to define the anchoring rims 5. The sprues from the top open on the top anchoring rim 5.

Preferably, the molding compound is injected through horizontal ducts into the feeder. However, a vertical injection can be also envisaged, but the feeding nozzle has to be adequately heated in order to maintain a high flowability of the compound.

The molding compound preferably comprises ferrite bound by a thermosetting polymer. or as an alternative rare earth elements bound by a thermosetting polymer. The thermosetting polymer may be an epoxy resin.

During or right after the injection molding step, the magnetizing means 140 are activated so as to permanently magnetize the molding compound trapped within the cavities 30.

After the injection molding step, the overmolded lamination stack 20 is extracted from the mold 100 and the balancing plates 6 are glued to the anchoring rims 5, preferably by means of an epoxy resin, heat resistant at a temperature of at least 130°C.

The pulley 71 is then fitted at the end of the shaft 7.

After the pulley 71 has been attached, the resulting rotor assembly 1 is balanced by blind drilling the end surface of the balancing plates 6.

Finally, in order to complete the motor, the rotor assembly 1 and the stator assembly 11 are assembled together. The shaft 7 is mounted on bearings 70, which are housed in the respective hubs of the front and back supports 14, 15. The supports 14, 15 are further placed over the opposite ends of the stator assembly 11.

Then, by means of the threaded connectors between the front and back supports 14, 15, these are moved toward each other packing the rotor 1 and stator 11 assemblies in their final configuration.

Obviously a person skilled in the art can apply numerous modifications and variations to the devices described above to meet with specific and contingent needs; these would, nevertheless all fall within the scope of protection of the invention as described in the following claims.

## Claims

1. Method of manufacturing a rotor assembly (1) for a permanent-magnet-assisted synchronous motor (10), comprising the following steps:
- cutting a plurality of laminations (2) of equal shape, each lamination being substantially circular and having a plurality of inner slots (3);
- stacking said laminations (2) together so as to form a lamination stack (20), each lamination (2) being rotated of a predetermined angle with respect to the underlying one so that the slots (3) define continuous, axially skewed cavities (30) within the lamination stack (20);
- injecting, through injection-molding, a polymer-bonded magnetic compound within said cavities (30) in order to define inner permanent magnets (4) of the rotor assembly (1) filling said cavities (30).

2. Method according to claim 1, further comprising a step of applying at least a balancing plate (6) over one or both ends of the lamination stack (20).

3. Method according to claim 2, wherein, during the injection step, the polymer-bonded magnetic compound further defines at least one anchoring feature protruding in the axial direction with respect to the lamination stack (20), said balancing plate (6) being attached to said anchoring feature.

4. Method according to claim 3, wherein said anchoring feature is an anchoring rim (5).

5. Method according to one of claims 3 or 4, wherein said balancing plate (6) is attached to said anchoring feature by means of a glue.

6. Method according to claim 5, wherein said glue is an epoxy resin, heat resistant at a temperature of at least 130°C.

7. Method according to one of claims 3-6, further comprising a step of balancing the rotor assembly (1) by removing material from the balancing plate (6).

8. Method according to one of the previous claims, comprising a step of magnetizing the polymer-bonded magnetic compound, so that the inner permanent magnets (4) are magnetized with different polarities.

9. Method according to claim 8, wherein said step of magnetizing the polymer-bonded magnetic compound is performed during injection molding.

10. Method according to any one of the previous claims, wherein the inner slots (3) are substantially arc-shaped, their convex side pointing toward the center of their lamination (2), said inner slots (3) being configured in an even number of groups, each group being confined in a different circular sector of the lamination (2).

11. Method according to claim 10, wherein the permanent magnets (4) defined in the cavities (30) made up by the inner slots (3) of adjacent groups are magnetized with opposite polarities.

12. Method according to any one of the previous claims, further comprising a step of press fitting a shaft (7) in a central hole (8) of the lamination stack (20).

13. Method according to claim 12, wherein said step of press-fitting a shaft (7) in a central hole (8) of the lamination stack (20) is performed before the step of injection molding.

14. Method according to one of the previous claims, wherein said injection-molding step is performed by inserting the lamination stack (20) in a housing (120) within a mold (100), the polymer-bonded magnetic compound being injected laterally into a feeder of the mold (100) placed over the housing (120).

15. Method of manufacturing a permanent-magnet-assisted synchronous motor (10), comprising the steps of manufacturing a rotor assembly according to any one of the previous claims.
